# EUROPÄISCHE PATENTSCHRIFT

(11) **EP 2 293 957 B1**
(45) Veröffentlichungstag und Bekanntmachung des Hinweises auf die Patenterteilung: **09.10.2013**
(21) Anmeldenummer: 09772078.3
(22) Anmeldetag: 12.06.2009
(51) Int. Cl.: B60K 35/00, B60K 37/06

(54) **KRAFTFAHRZEUG-BEDIENEINRICHTUNG**
MOTOR VEHICLE OPERATING DEVICE
DISPOSITIF DE COMMANDE DE VEHICULE MOTORISE

(30) Priorität: 04.07.2008 DE 102008031719
(43) Veröffentlichungstag der Anmeldung: 16.03.2011
(73) Patentinhaber: Bayerische Motoren Werke Aktiengesellschaft, 80809 München (DE)
(72) Erfinder: KUENZNER, Hermann, 85356 Freising (DE); DISTLER, Armin, 81377 München (DE)
(74) Vertreter: Mayer-Martin, Christian
(86) Internationale Anmeldenummer: PCT/EP2009/004237
(87) Internationale Veröffentlichungsnummer: WO 2010/000378

(56) Entgegenhaltungen:
- EP-A- 1 247 686
- DE-A1- 10 207 872
- DE-A1- 19 953 855

## Beschreibung

Die Erfindung betrifft eine Kraftfahrzeug-Bedieneinrichtung.

Moderne Kraftfahrzeuge verfügen zunehmend über eine separat von einer Anzeigeeinrichtung gebildete Bedieneinrichtung im Bereich der Mittelkonsole. Eine solche Bedieneinrichtung ist beispielsweise aus der EP 0893750 B1 bekannt. Die Bedieneinrichtung verfügt dabei über ein bidirektional um seine Symmetrieachse drehbares Schaltglied, das zudem axial bewegbar (drückbar) und schwenkbar oder schiebbar gelagert ist. Damit können durch ein Drehen, Drücken und/oder Schwenken/Schieben des Schaltgliedes beispielsweise Menüpunkte auf einer Anzeigeeinrichtung markiert und ausgewählt werden oder Parameter eingestellt werden. Eine Bedieneinrichtung mit den Merkmalen des Oberbegriffs des unabhängigen Anspruchs ist bekannt aus DE 102 07 872.

Der Erfindung liegt nun die Aufgabe zugrunde, eine verbesserte Kraftfahrzeug-Bedieneinrichtung anzugeben.

Diese Aufgabe wird durch die Merkmale der unabhängigen Ansprüche gelöst. Vorteilhafte Weiterbildungen der Erfindung sind den abhängigen Ansprüchen zu entnehmen.

Eine erfindungsgemäße Kraftfahrzeug-Bedieneinrichtung umfasst eine Anzeigeeinrichtung, ein Bedienelement und eine Steuereinrichtung, die derart miteinander gekoppelt und hardwaretechnisch und/oder programmtechnisch eingerichtet sind, dass auf der Anzeigeeinrichtung ein Bedienelementsymbol dargestellt ist, das hinsichtlich der Umrissgestalt (z.B. ein Kreis) dem Bedienelement entspricht.

Mittels des Bedienelementes sind, insbesondere durch ein Drehen des Bedienelementes, Menüpunkte einer hierarchischen Menüstruktur markierbar oder auswählbar.

Eine basierend auf einem Drehfreiheitsgrad des Bedienelementes durchführbare Auswahl eines ersten Menüpunktes aus einer Vielzahl von Menüpunkten wird dadurch angezeigt, dass ausgehend von dem Bedienelementsymbol eine Linie in Richtung einer ersten oder ausgewählten Menüpunktdarstellung, die Teil einer Vielzahl von auswählbaren Menüpunktdarstellungen ist, dargestellt wird.

Der Fahrer erkennt dadurch, durch welchen Bedienfreiheitsgrad momentan Menüpunkte auswählbar sind und welcher Menüpunkt momentan ausgewählt oder markiert ist. Zudem erkennt der Fahrer einfach, basierend auf welcher Drehrichtung ein gewünschter Menüpunkt ausgehend vom momentan ausgewählten Menüpunkt auswählbar ist. Dies ergibt sich aus der Darstellung der relativen Anordnung des Bedienelementsymbols zu den Menüpunktdarstellungen. Dadurch wird insbesondere während der Fahrt das zuverlässige, schnelle und fehlerfreie Auswählen von Menüpunkten erleichtert. Dieser Vorteil wird durch die folgenden Weiterbildungen noch verstärkt.

Vorzugsweise erfolgt die Menüpunktdarstellung, die Teil einer Vielzahl von auswählbaren Menüpunktdarstellungen ist, und in deren Richtung die von dem Bedienelement ausgehende Liniendarstellung verläuft, hervorgehoben.

Vorzugsweise wird durch eine Bedienaktion entsprechend dem Drehfreiheitsgrad bewirkt, dass ausgehend von dem Bedienelementsymbol eine Linie in Richtung einer zur bislang ausgewählten Menüpunktdarstellung benachbarten Menüpunktdarstellung, die Teil einer Vielzahl von auswählbaren Menüpunktdarstellungen ist, dargestellt wird (nicht mehr in Richtung der bislang ausgewählten Menüpunktdarstellung).

Vorzugsweise wird durch eine Bedienaktion entsprechend dem Drehfreiheitsgrad bewirkt, dass die zur bislang ausgewählten Menüpunktdarstellung benachbarte Menüpunktdarstellung, die Teil einer Vielzahl von auswählbaren Menüpunktdarstellungen ist, und in deren Richtung die von dem Bedienelement ausgehende Liniendarstellung verläuft, hervorgehoben dargestellt wird (nicht mehr die bislang ausgewählte Menüpunktdarstellung).

Bevorzugt ist vorgesehen, dass durch ein Drücken auf das Bedienelement eine endgültige Auswahl des Menüpunktes erfolgt, dessen zugehörige Menüpunktdarstellung hervorgehoben erfolgt, und in deren Richtung die von dem Bedienelement ausgehende Liniendarstellung verläuft.

Bei der gleichzeitigen Darstellung verschiedener Menüebenen, von denen eine Menüebene aktiv (oder ausgewählt, Kennzeichnung beispielsweise durch eine hervorgehobene Darstellung der Menüebene) ist, wird das Bedienelementsymbol vorzugsweise immer der aktiven Menüebene zugeordnet angezeigt. Beispielsweise wird das Bedienelementsymbol in der Nähe der aktiven Menüebene, ganz oder teilweise der aktiven Menüebene überlagert und/oder in einer dafür vorgesehenen Aussparung der Menüebenendarstellung dargestellt.

Besonders bevorzugt ist es, dass durch eine Bewegung des Bedienelementes in eine Richtung, welche ausgehend von der Darstellung des Bediensymbols der Richtung einer Darstellung einer weiteren Menüebene entspricht, die weitere Menüebene aktiv wird (die bisher aktive Menüebene wird inaktiv) und das Bedienelementsymbol dieser nun aktiven Menüebene zugeordnet angezeigt wird.

Im Folgenden wird die Erfindung anhand von Beispielen unter Bezugnahme auf die folgenden Figuren näher erläutert:
- Figuren 1 und 2: zeigen eine Menüpunkt-Auswahl-Darstellung;
- Figuren 3 und 4: zeigen zwei Anzeigestati einer Bedieneinrichtung.

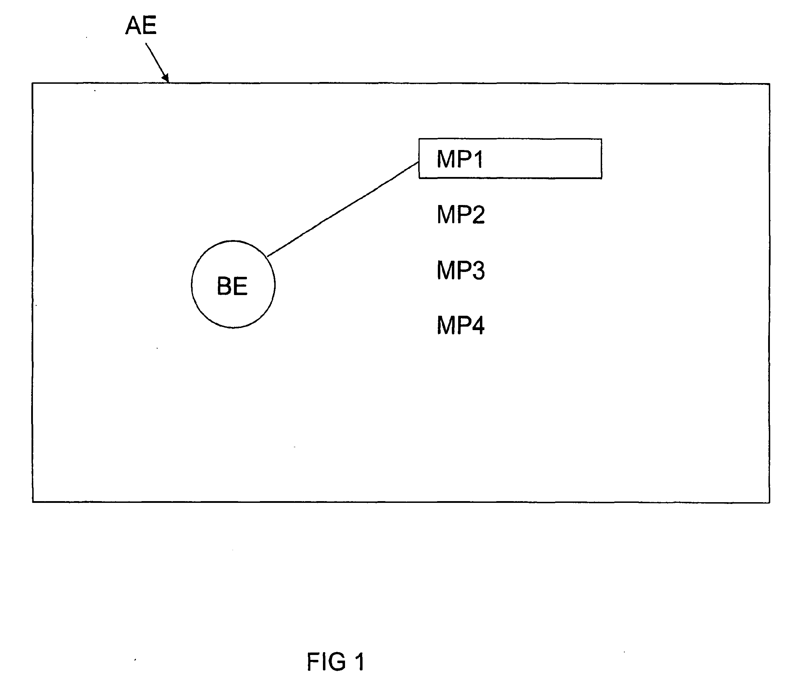

Figur 1 zeigt als Teil einer Kraftfahrzeug-Bedieneinrichtung, die auch ein Bedienelement und eine Steuereinrichtung umfasst, eine Anzeigeeinrichtung AE.

Es ist Bedienelementsymbol BE dargestellt, das ein abgesetzt von der Anzeigeeinrichtung AE angeordnetes Bedienelement symbolisiert. Durch ein Drehen des Bedienelementes ist ein Menüpunkt aus einer Vielzahl von Menüpunkten auswählbar.

Diese Auswahlmöglichkeit und der momentan ausgewählte Menüpunkt wird einem Fahrer dadurch angezeigt, dass ausgehend von dem Bedienelementsymbol BE eine Linie zu der momentan ausgewählten Menüpunktpunktdarstellung MP1 angezeigt wird. Diese Menüpunktpunktdarstellung MP1 erfolgt zudem hervorgehoben, hier eingerahmt. Die Linie verläuft von dem Bedienelementsymbol BE zu dem Rahmen, der die ausgewählte Menüpunktpunktdarstellung MP1 umgibt.

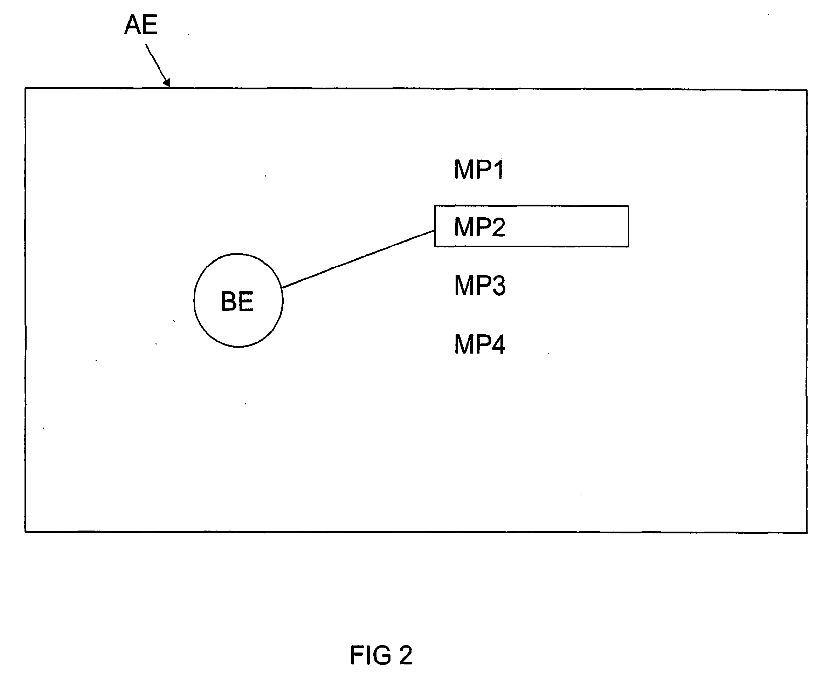

Ausgehend von dem Anzeigestatus gemäß Figur 1 ergibt sich durch eine Drehung des Bedienelementes im Uhrzeigersinn der Anzeigestatus gemäß Figur 2. Es ist nun die Menüpunktpunktdarstellung MP2 ausgewählt. Dies wird dem Fahrer dadurch angezeigt, dass der Rahmen, nun die ausgewählte Menüpunktpunktdarstellung MP2 umgibt, und dass die Linie ausgehend von dem Bedienelementsymbol BE zu diesem Rahmen hin verläuft.

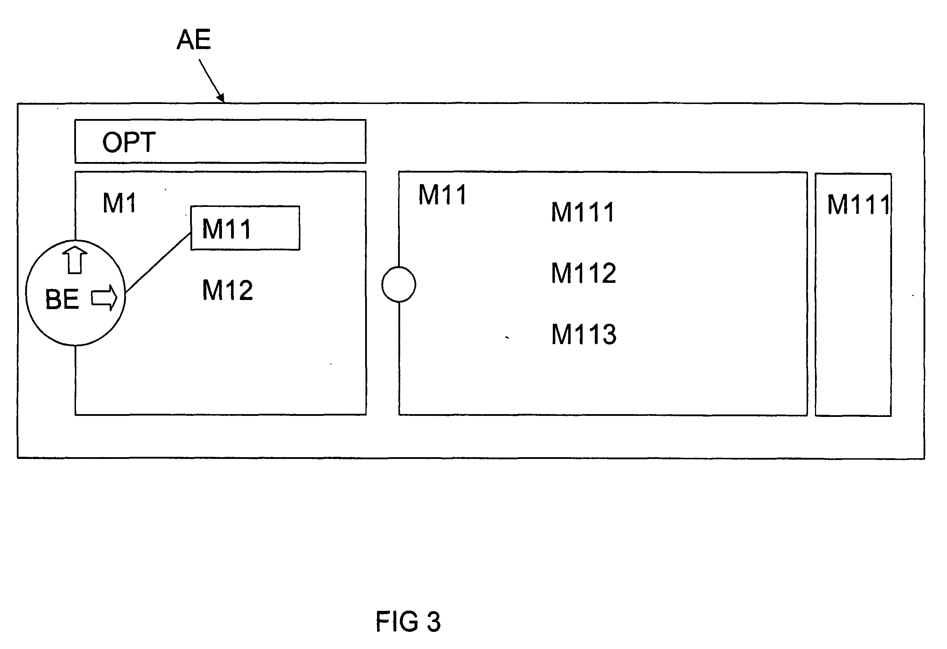

Figur 3 zeigt als Teil einer Kraftfahrzeug-Bedieneinrichtung, die auch ein Bedienelement und eine Steuereinrichtung umfasst, eine Anzeigeeinrichtung AE.

Bei dem Bedienelement (nicht dargestellt) handelt es sich beispielsweise um ein an sich bekanntes Dreh-Druck-Schwenk(Kipp oder Schiebe)element, das grundsätzlich entsprechend einer Vielzahl von Bedienfreiheitsgraden (ein oder mehrere Drehfreiheitsgrade und/oder ein Druckfreiheitsgrad und/oder ein oder mehrere Schwenk- oder Schiebe-Freiheitsgrade) bedienbar ist. Mittels des Bedienelementes kann durch eine auf der Anzeigeeinrichtung AE dargestellte hierarchische Menüstruktur navigiert werden.

Auf der Anzeigeeinrichtung AE ist ein Bedienelementsymbol BE dargestellt, das hinsichtlich der Umrissgestalt dem Bedienelement entspricht, und daher hier kreisförmig dargestellt ist

An verschiedenen Stellen der hierarchischen Menüstruktur sind verschiedene Gruppen von Bedienfreiheitsgraden zur Navigation freigeschaltet. Beispielsweise ist in Figur 1 eine erste Stelle der hierarchischen Menüstruktur, die beispielsweise mit einem ersten Anzeigestatus (oder Bedienstatus) gekoppelt ist, dargestellt.

An dieser Stelle der hierarchischen Menüstruktur werden drei Menüebenen M1, M11, M111 dargestellt. Zudem wird ein zur Menüebene M1 gehörendes Optionsmenü OPT dargestellt.

Die momentan aktive oder ausgewählte Menüebene M1 ist hervorgehoben (beispielsweise besonders hell, kontrastreich oder in einer besonderen Farbe) dargestellt. Zudem ist das Bedienelementsymbol BE dieser aktiven Menüebene M1 überlagert dargestellt.

Die an dieser Stelle der Menüstruktur freigeschalteten oder nutzbaren Bedienfreiheitsgrade des Bedienelementes werden auf dem Bedienelementsymbol BE angezeigt: Die Pfeilsymbole weisen auf ein mögliches Schwenken oder Schieben des Bedienelementes nach oben (oder vorne) und nach rechts hin. An der aktuellen Stelle der Menüstruktur nicht freigeschaltete Bedienfreiheitsgrade (beispielsweise "Schieben nach links") werden nicht angezeigt.

Die basierend auf einem Drehfreiheitsgrad des Bedienelementes durchführbare Auswahl eines Menüpunktes aus einer Vielzahl von Menüpunkten wird dadurch angezeigt, dass ausgehend von dem Bedienelementsymbol BE eine Linie in Richtung einer ersten Menüpunktdarstellung M11, die Teil einer Vielzahl von auswählbaren Menüpunktdarstellungen M11,M12 ist, dargestellt wird.

Eine nicht in der Figur dargestellte Ausführungsvariante sieht vor, dass die Schwenk/Schiebe-Freiheitsgrade nicht angezeigt werden, sondern nur ein oder die Drehfreiheitsgrade angezeigt werden.

Die erste Menüpunktdarstellung M11 wird hervorgehoben, hier eingerahmt, ausgeführt.

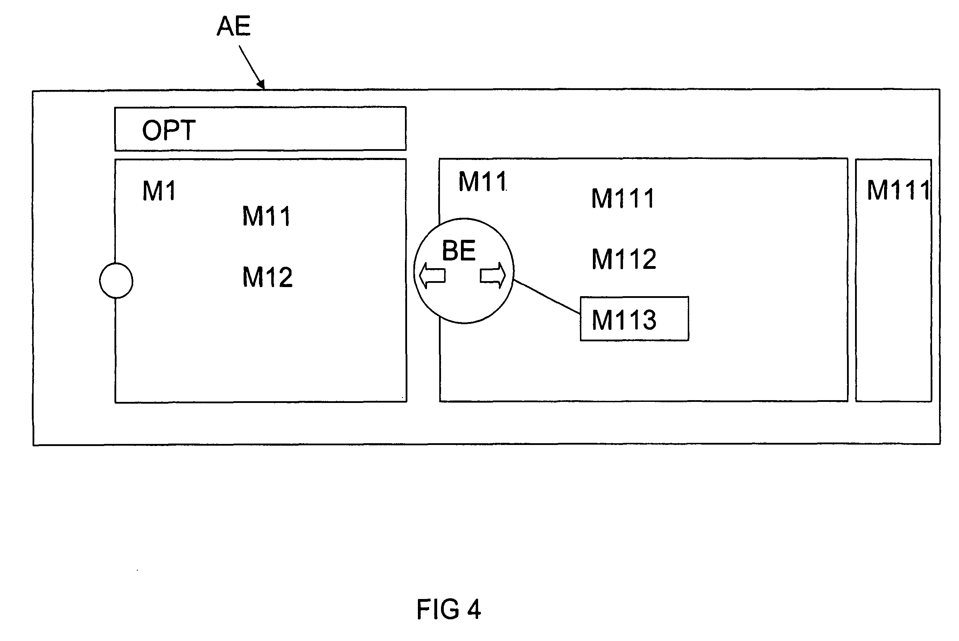

Durch eine Bewegung des Bedienelementes in eine Richtung, welche ausgehend von der Darstellung des Bediensymbols BE der Richtung einer Darstellung einer weiteren Menüebene OPT,M11 entspricht, wird die weitere Menüebene aktiv und das Bedienelementsymbol BE dieser nun aktiven Menüebene zugeordnet angezeigt. Beispielsweise ist in Figur 4 ein Anzeigestatus dargestellt, der sich ergibt, wenn das Bedienelement ausgehend von dem Anzeigestatus nach Figur 3 nach rechts bewegt wird.

Es ist nun die der Menüebenendarstellung M11 entsprechende Menüebene aktiv. Die Menüebene M1 ist nicht mehr aktiv. Das Bedienelementsymbol BE ist der nun aktiven Menüebenendarstellung M11 überlagert. Neben den zwei Schwenk-Freiheitsgraden (Pfeil links, Peil rechts) ist wieder ein Drehfreiheitsgrad freigeschaltet. Dieser bezieht sich nun aber auf die Menüpunkte M111,M112,M113 der Menüebene M11, wie durch die von dem Bedienelementsymbol BE ausgehende Liniendarstellung angezeigt.

Der Menüpunkt M113 ist markiert oder ausgewählt. Ein Drücken des Bedienelementes bewirkt nun eine Bestätigung der Auswahl dieses Menüpunktes M113.

## Patentansprüche

1. Kraftfahrzeug-Bedieneinrichtung
- mit einer Anzeigeeinrichtung, einem Bedienelement und einer Steuereinrichtung, die derart miteinander gekoppelt und eingerichtet sind,
- dass auf der Anzeigeeinrichtung ein Bedienelementsymbol dargestellt ist, das hinsichtlich der Umrissgestalt dem Bedienelement entspricht,
- dass mittels des Bedienelementes Menüpunkte einer hierarchischen Menüstruktur auswählbar sind, **dadurch gekennzeichnet,**
- **dass** eine basierend auf einem Drehfreiheitsgrad des Bedienelementes durchführbare Auswahl eines Menüpunktes aus einer Vielzahl von Menüpunkten dadurch angezeigt wird, dass ausgehend von dem Bedienelementsymbol eine Linie in Richtung einer ausgewählten Menüpunktdarstellung, die Teil einer Vielzahl von auswählbaren Menüpunktdarstellungen ist, dargestellt wird.

2. Kraftfahrzeug-Bedieneinrichtung nach einem der vorhergehenden Ansprüche,
bei der die Menüpunktdarstellung, die Teil einer Vielzahl von auswählbaren Menüpunktdarstellungen ist, und in deren Richtung die von dem Bedienelement ausgehende Liniendarstellung verläuft, hervorgehoben erfolgt.

3. Kraftfahrzeug-Bedieneinrichtung nach einem der vorhergehenden Ansprüche,
bei der durch eine Bedienaktion entsprechend dem Drehfreiheitsgrad bewirkt wird, dass ausgehend von dem Bedienelementsymbol eine Linie in Richtung einer zur bislang ausgewählten Menüpunktdarstellung benachbarten Menüpunktdarstellung, die Teil einer Vielzahl von auswählbaren Menüpunktdarstellungen ist, dargestellt wird.

4. Kraftfahrzeug-Bedieneinrichtung nach einem der vorhergehenden Ansprüche,
bei der durch eine Bedienaktion entsprechend dem Drehfreiheitsgrad bewirkt wird, dass die zur bislang ausgewählten Menüpunktdarstellung benachbarte Menüpunktdarstellung, die Teil einer Vielzahl von auswählbaren Menüpunktdarstellungen ist, und in deren Richtung die von dem Bedienelement ausgehende Liniendarstellung verläuft, hervorgehoben dargestellt wird.

5. Kraftfahrzeug-Bedieneinrichtung nach einem der vorhergehenden Ansprüche,
bei der durch ein Drücken auf das Bedienelement eine Bestätigung der Auswahl des Menüpunktes erfolgt, dessen zugehörige Menüpunktdarstellung hervorgehoben erfolgt, und in deren Richtung die von dem Bedienelement ausgehende Liniendarstellung verläuft.

6. Kraftfahrzeug-Bedieneinrichtung nach einem der vorhergehenden Ansprüche,
bei der bei der gleichzeitigen Darstellung verschiedener Menüebenen, von denen eine Menüebene aktiv, das Bedienelementsymbol der aktiven Menüebene zugeordnet angezeigt wird.

7. Kraftfahrzeug-Bedieneinrichtung nach einem der vorhergehenden Ansprüche,
bei der durch eine Bewegung des Bedienelementes in eine Richtung, welche ausgehend von der Darstellung des Bediensymbols der Richtung einer Darstellung einer weiteren Menüebene entspricht, die weitere Menüebene aktiv wird und das Bedienelementsymbol dieser aktivierten Menüebene zugeordnet angezeigt wird.

## Claims

1. A motor vehicle operating device
- with a display device, an operating element and a control device, which are coupled to one another and set up in such a way,
- that an operating element symbol corresponding to the operating element with respect to the outline shape is shown on the display device,
- that menu points of a hierarchical menu structure can be selected by means of the operating element,
**characterised in that** a selection of a menu point, which can be carried out based on a rotational degree of freedom of the operating element from a large number of menu points, is displayed **in that**, proceeding from the operating element symbol, a line in the direction of a selection menu point display, which is part of a large number of selectable menu point displays, is displayed.

2. A motor vehicle operating device according to any one of the preceding claims, wherein the menu point display, which is part of a large number of selectable menu point displays, and in the direction of which the line display proceeding from the operating element runs, is highlighted.

3. A motor vehicle operating device according to any one of the preceding claims, wherein an operating action corresponding to the rotational degree of freedom brings about the fact that proceeding from the operating element symbol, a line is displayed in the direction of a menu point display, which is adjacent to the previously selected menu point display and is part of a large number of selectable menu point displays.

4. A motor vehicle operating device according to any one of the preceding claims, wherein an operating action in accordance with the rotational degree of freedom brings about the fact that the menu point display, which is adjacent to the previously selected menu point display and is part of a large number of selectable menu point displays, and in the direction of which the line display proceeding from the operating element runs, is highlighted.

5. A motor vehicle operating device according to any one of the preceding claims, wherein by pressing on the operating element, a confirmation takes place of the selection of the menu point, the associated menu point display of which is highlighted, and in the direction of which the line display proceeding from the operating element runs.

6. A motor vehicle operating device according to any one of the preceding claims, wherein when various menu levels are displayed simultaneously, of which one menu level is active, the operating element symbol is displayed in a manner assigned to the active menu level.

7. A motor vehicle operating device according to any one of the preceding claims, wherein by means of a movement of the operating element in a direction which, proceeding from the display of the operating symbol, corresponds to the direction of a display of a further menu level, the further menu level becomes active and the operating element symbol is displayed in a manner assigned to this activated menu level.

## Revendications

1. Installation d'actionnement d'un véhicule,
comportant un dispositif d'affichage, un élément d'actionnement et un élément de commande qui sont couplés et conçus,
de façon telle que sur le dispositif d'affichage soit représenté un symbole de l'élément d'actionnement dont la configuration correspond au contour de cet l'élément d'actionnement, et
que au moyen de l'élément d'actionnement on puisse sélectionner des points de menu d'une structure de menu hiérarchique,
**caractérisée en ce que**
une sélection d'un point menu parmi une série de points de menu pouvant être effectuée à partir du degré de liberté de rotation de l'élément d'actionnement est indiquée **en ce qu'**à partir du symbole de l'élément d'actionnement une ligne est représentée en direction d'une représentation du point de menu sélectionné qui correspond à une partie d'une série de représentations de points de menu pouvant être sélectionnés.

2. Dispositif d'actionnement d'un véhicule conforme à la revendication précédente, dans lequel
la représentation du point de menu qui correspond à une partie d'une série de représentations de points menu pouvant être sélectionnés et dans la direction de laquelle s'étend la représentation linéaire provenant de l'élément de menu est effectuée de manière accentuée.

3. Dispositif d'actionnement d'un véhicule conforme à l'une des revendications précédentes, dans lequel
on représente par une action d'actionnement correspondant au degré de liberté de rotation, à partir du symbole de l'élément d'actionnement une ligne en direction d'une représentation du point de menu voisin de la représentation du point de menu sélectionné jusqu'alors qui correspond à une partie d'une série de représentations de points de menu pouvant être sélectionnés.

4. Dispositif d'actionnement d'un véhicule conforme à la revendication précédente, dans lequel
on représente de manière accentuée par une action d'actionnement correspondant au degré de liberté de rotation à partir du symbole de l'élément d'actionnement, la représentation du point menu voisin de la représentation du point menu sélectionné jusqu'alors qui correspond à une partie d'une série de représentations de points de menu pouvant être sélectionnés et dans la direction de laquelle s'étend la représentation linéaire partant de l'élément d'actionnement.

5. Dispositif d'actionnement d'un véhicule conforme à l'une des revendications précédentes, dans lequel
en appuyant sur l'élément d'actionnement on confirme la sélection du point de menu dont la représentation associée est accentuée et dans la direction de laquelle s'étend la représentation linéaire partant de l'élément d'actionnement.

6. Dispositif d'actionnement d'un véhicule conforme à l'une des revendications précédentes, dans lequel
en présence de la représentation simultanée de différents plans de menu parmi lesquels un plan de menu est actif, le symbole de l'élément d'actionnement est indiqué de manière associée à ce plan de menu actif.

7. Dispositif d'actionnement d'un véhicule conforme à l'une des revendications précédentes, dans lequel
suite à un déplacement de l'élément d'actionnement dans une direction qui correspond, à partir de la représentation du symbole d'actionnement à la direction d'une représentation d'un autre plan menu, l'autre autre plans de menu devient actif et le symbole de l'élément d'actionnement est indiqué de manière associée à ce plan de menu activé.
